# EUROPÄISCHE PATENTANMELDUNG

(11) **EP 1 524 300 A1**
(43) Veröffentlichungstag der Anmeldung: **20.04.2005**
(21) Anmeldenummer: 04024505.2
(22) Anmeldetag: 14.10.2004
(51) Int. Cl.: C08L 95/00, C08L 91/00, C08K 5/10

(54) **Polymerbitumenmassen umfassend tierische und/oder pflanzliche Öle oder Fette als Weichmacher**

(30) Priorität: 15.10.2003 DE 20315871 U
(71) Anmelder: Georg Börner Chemisches Werk für Dach- und Bautenschutz GmbH & Co. KG, 36251 Bad Hersfeld (DE)
(72) Erfinder: Fassbender, Gerhard, 36251 Bad Hersfeld (DE)
(74) Vertreter: Beckmann, Claus, Dr.

(57) **Zusammenfassung**

Es werden Polymerbitumenmassen beschrieben, die umfassen: (a) Bitumen, (b) mindestens ein Polymer und (c) mindestens ein tierisches und/oder pflanzliches Öl oder Fett oder ein Derivat oder ein Gemisch davon, wobei der Erweichungspunkt der Polymerbitumenmasse mindestens 85°C beträgt. Die erfindungsgemäßen Polymerbitumenmassen eignen sich zur Herstellung von Dach- und Dichtungsbahnen, Fugenvergussmassen, Fugenbandmassen, selbstklebenden Polymerbitumenmassen, Dämpfungsmassen oder Nahtklebern.

## Beschreibung

### Technisches Gebiet der Erfindung

Die vorliegende Erfindung betrifft Polymerbitumenmassen, die insbesondere zur Herstellung von Dach- und Dichtungsbahnen, Fugenvergussmassen, Fugenbandmassen, selbstklebenden Polymerbitumenmassen, Dämpfungsmassen oder Nahtklebern verwendet werden. Insbesondere betrifft die Erfindung solche Polymerbitumenmassen, die tierische und/oder pflanzliche Öle oder Fette als Weichmacher enthalten.

### Stand der Technik

Polymerbitumenmassen werden durch intensives Vermischen von Bitumen (Destillationsbitumen, Oxidationsbitumen, Fällungsbitumen, Naturasphalt und dergleichen sowie Mischungen daraus) mit Kunststoffen bzw. Polymeren (SBS, SEBS, SEPS, SIS, PE, (a)PP, (i)PP, EVA, EMA, EBA, EEA, E(P)(D)M, CR, NR, SBR, ACR und dergleichen) hergestellt. Ökonomisch von Bedeutung sind dabei vornehmlich Polymerbitumina auf der Basis von Styrolcopolymerisaten (SBS, SIS und dergleichen) und auf der Basis von PP, insbesondere (a)PP. Polymerbitumina auf der Basis von Ethylencopolymerisaten (EVA, EBA und dergleichen) sowie auf der Basis E(P)M finden gelegentlich in Spezialanwendungen Einsatz.

Dabei werden Polymerbitumina mit niedrigen Kunststoffanteilen (ca. 2 bis 5%) vorwiegend im Asphaltstraßenbau eingesetzt. Polymerbitumina mit mittleren Kunststoffgehalten (bis etwa 13%) werden als Heißvergussmassen, als Schallschutz (Antidröhnmassen) und zur Herstellung von Dach- und Dichtungsbahnen verwendet. Polymerbitumenmassen mit hohen Kunststoffanteilen (bis etwa 50%) werden dagegen typischerweise in hochwertigen leistungsfähigen Vergussmassen, hochwertigen Dach- und Dichtungsbahnen und kaltselbstklebenden Bitumenprodukten eingesetzt.

In Polymerbitumenmassen, insbesondere in solchen mit hohem Kunststoffgehalt, sind Weichmacheröle eine wesentliche Komponente. Diese sind in der Lage, durch ihr Löseund Quellvermögen mit hochpolymeren Stoffen in Wechselwirkung zu treten und ein homogenes System mit diesen zu bilden. Die Zugabe von Weichmacherölen verleiht den entsprechenden Zusammensetzungen erwünschte physikalische Eigenschaften, wie z.B. emiedrigte Einfriertemperaturen, verbesserte elastische Eigenschaften, geringere Härte und besseres Haftvermögen.

Die bislang zur Herstellung von Polymerbitumenmassen verwendeten Weichmacheröle sind unlegierte Mineralöle, gewisse Altölrezyklatfraktionen und Petrolatum (Paraffingatsch). Als besonders leistungsfähig erwiesen sich dabei hocharomatische unlegierte Mineralöle. Da in diesen jedoch erhebliche Mengen karzinogener polyaromatischer Kohlenwasserstoffe enthalten sein können, werden diese nicht mehr eingesetzt. Stattdessen finden heute naphtenische und paraffinische Öle Einsatz, die normalerweise wesentlich weniger leistungsfähig sind, so dass ein höherer Weichmacheranteil in Kauf genommen werden muss, was gelegentlich zu Problemen führen kann, beispielsweise bei der Formstabilität der Produkte bei höheren Temperaturen. Leistungsfähige Alternativen dazu wären synthetische aromatische Öle. Diese werden jedoch aufgrund ihrer schlechten Verfügbarkeit und ihres hohen Preises praktisch kaum verwendet.

Die EP 0 568 757 A1 beschreibt Bitumenmassen als heiß anzuwendende Bindemittel zur Herstellung eines Asphaltsplittbelags im Straßenbau, umfassend Bitumen und mindestens ein tierisches und/oder pflanzliches Fett oder Öl. Das Bitumen kann dabei auch ein polymerhaltiges Bitumen sein. Dabei handelt es sich um gebrauchsfertig formulierte Polymerbitumina für den Straßenbau, die demgemäß Mineralöle als Weichmacher enthalten und zusätzlich mit bestimmten tierischen und/oder pflanzlichen Fetten oder Ölen verschnitten werden.

Die DE 195 19 539 A1 beschreibt den Einsatz von pflanzlichen Ölen wie Rapsöl oder Rapsölderivaten als "trocknende" Öle ("Fluxkomponente") in Bitumenemulsionen zur Herstellung von Kaltmischgut oder von Straßenbelägen.

Solche Polymerbitumenmassen für den Straßenbau besitzen allgemein niedrige Erweichungspunkte im Bereich von 40 °C bis 70 °C, d.h. sie sind in der Wärme wenig standfest und deshalb grundsätzlich für Spezialanwendungen als Hochleistungspolymerbitumenmassen ungeeignet.

Die aus dem Stand der Technik bekannten Polymerbitumenmassen mit Mineralölen als Weichmacher besitzen den Nachteil, dass sich das Mineralöl von dem Polymerbitumen separiert ("ausblutet"), was zu einer schnellen Versprödung führt. Außerdem werden zur Erzielung einer hinreichenden Wirkung als Weichmacher vergleichsweise hohe Mengen an Mineralöl benötigt.

### Beschreibung der Erfindung

Der vorliegenden Erfindung liegt demnach die Aufgabe zugrunde, neue Polymerbitumenmassen bereitzustellen, wobei
(i) die Polymerbitumenmasse für Spezialanwendungen geeignet ist, wie z. B. die Herstellung von Polymerbitumenschweißbahnen, Polymerbitumendeckmassen für Dach- und Dichtungsbahnen, selbstklebende Polymerbitumenmassen, (elastoplastische) Fugenvergussmassen, (hoch standfeste, elastoplastische) Dämpfungsmassen, Fugenbandmassen und Nahtkleber,
(ii) das Leistungsvermögen der resultierenden Polymerbitumenmasse, das unter Verwendung der bekannten aromatischen Weichmacheröle erzielte Leistungsvermögen erreicht oder sogar übertrifft,
(iii) der Weichmacher ein möglichst niedriges ökotoxisches Potential aufweist (d.h., die Umwelt wird im Havariefall nicht nachhaltig belastet) und
(iv) der Weichmacher dem Gebot der Nachhaltigkeit möglichst entspricht, d.h. möglichst Öle bzw. Fette aus nachwachsenden Rohstoffen Einsatz finden.

Diese Aufgabe wird erfindungsgemäß durch Polymerbitumenmassen gemäß Anspruch 1 gelöst. Vorteilhafte Ausführungsformen der Erfindung sind in den Unteransprüchen angegeben.

Die in den erfindungsgemäßen Polymerbitumenmassen einsetzbaren Bitumina unterliegen keiner besonderen Beschränkung, solange die Polymerbitumenmasse insgesamt einen Erweichungspunkt von mindestens 85 °C, bevorzugt 90 °C, mehr bevorzugt 95 °C aufweist. Die Bitumenkomponente der erfindungsgemäßen Polymerbitumenmasse kann demgemäß insbesondere ausgewählt sein aus der Gruppe, bestehend aus Destillationsbitumen, Oxidationsbitumen, Fällungsbitumen und Naturasphalt sowie Gemischen daraus.

Der Erweichungspunkt (EP) der erfindungsgemäßen Polymerbitumenmassen wird nach der "Ring und Kugel"-Methode gemäß DIN EN 1427 bestimmt (EP RuK).

Der Anteil der Bitumenkomponente in den erfindungsgemäßen Polymerbitumenmassen beträgt bevorzugt 25 bis 70 Gew.-%, bezogen auf das Gesamtgewicht der Polymerbitumenmasse.

Die Polymerkomponente der erfindungsgemäßen Polymerbitumenmassen ist vorzugsweise ausgewählt aus der Gruppe bestehend aus SBS, SEBS, SEPS, SIS, PE, (a)PP, (i)PP, EVA, EMA, EBA, EEA, E(P)(D)M, CR, NR, SBR und ACR sowie Gemischen daraus. Die Bedeutung dieser Abkürzungen ist dem Fachmann wohl bekannt. Der Anteil der Polymerkomponente liegt bevorzugt im Bereich von 2 bis 50 Gew.-%, mehr bevorzugt 8 bis 50 Gew.-%, am meisten bevorzugt 15 bis 50 Gew.-%, bezogen auf das Gesamtgewicht der Polymerbitumenmasse. Bei den erfindungsgemäßen Polymerbitumenmassen handelt es sich demgemäß bevorzugt um solche mit vergleichsweise hohem Polymeranteil.

Die erfindungsgemäßen Polymerbitumenmassen enthalten des Weiteren mindestens ein tierisches und/oder pflanzliches Öl oder Fett oder ein Derivat oder ein Gemisch davon. Diese Öle bzw. Fette werden auch als native Öle bzw. Fette bezeichnet. Diese Komponente dient als Weichmacher bzw. Verträglichkeitsvermittler.

Zu den in den erfindungsgemäßen Polymerbitumenmassen einsetzbaren pflanzlichen Ölen, die bei Raumtemperatur überwiegend flüssig sind, zählen z. B. Holzöl, Kokosöl, Leinöl, Olivenöl, Palmöl, Rapsöl, Rizinusöl, Distelöl, Nussöle, Keimöle, Sonnenblumenöl, Sojaöl, Tallöl und dergleichen sowie Derivate davon. Zu den erfindungsgemäß einsetzbaren tierischen Ölen zählen beispielsweise Fischöle wie Heringsöl und Menhadenöl, Klauenöl, Knochenöl, Lardöl, Lebertran und dergleichen sowie Derivate davon. Als Weichmacher bzw. Verträglichkeitsvermittler können darüber hinaus auch Fette, die bei Raumtemperatur überwiegend fest oder pastös sind, eingesetzt werden, wie z. B. Stillingiafett, Sheabutter, Palmbutter, Rindertalg, Schweineschmalz und Butterfett sowie Derivate davon.

Unter einem Derivat eines nativen Öls bzw. Fetts ist in diesem Zusammenhang allgemein eine (chemisch) veränderte Substanz auf der Basis des Öls bzw. Fetts zu verstehen, z. B. ein Veresterungs- oder Umesterungsprodukt, ein aus dem Öl bzw. Fett gebildetes Alkydharz oder ein epoxydiertes Öl bzw. Fett.

Der Anteil des tierischen und/oder pflanzlichen Öls oder Fetts oder des Derivats davon in der erfindungsgemäßen Polymerbitumenmasse beträgt im Allgemeinen 1 bis 70 Gew.-%, bevorzugt 1 bis 50 Gew.-%, mehr bevorzugt 1 bis 10 Gew.-% bezogen auf das Gesamtgewicht der Polymerbitumenmasse.

Derartige native Öle sind stark funktionalisierte Verbindungen, wodurch beim Vermischen mit dem sehr gering funktionalisierten Bitumen Verträglichkeitsprobleme zu erwarten waren. Insbesondere bei Polymerbitumenmassen mit mittleren und hohen Polymergehalten sollte dieses Problem weiter verstärkt werden, weil die Lösekraft des Bitumens bereits durch die Zugabe des Kunststoffanteils stark beansprucht wird.

Überraschenderweise gelingt es jedoch erfindungsgemäß in Polymerbitumenmassen, sogar bei Polymerbitumina mit mittleren und hohen Kunststoffanteilen, die für den jeweiligen Anwendungszweck notwendige Menge des nativen Öls, vorzugsweise Rapsöl, als Weichmacher in die Rezeptur zu integrieren.

Besonders erstaunlich ist dabei die Tatsache, dass in Oxidationsbitumina größere Mengen hochmolekularer (Kunst-) Stoffe homogen eingearbeitet werden können. Oxidationsbitumina galten nämlich bisher als nahezu unverträglich mit (hochmolekularen) Kunststoffen wie zum Beispiel SBS.

Die erfindungsgemäßen Polymerbitumenmassen können des Weiteren zusätzlich eine oder mehrere der folgenden Komponenten enthalten: Füllstoffe natürlichen, (teil-)synthetischen oder mineralischen Ursprungs, wie z.B. Steinmehl, Carbide, Holzmehl, (Alt)gummimmehl; Fasern natürlichen, (teil-)synthetischen oder mineralischen Ursprungs, wie z.B. Glasfasern, Mineralfasem, Cellulosefasern, Hanffasern, Karbonfasern, Wollastonit; Wachse natürlichen, (teil-)synthetischen oder mineralischen Ursprungs, wie z.B. Montanwachs, Wollwachs, Carnaubawachs, Paraffinwachs, Esterwachs; Harze natürlichen oder (teil-)synthetischen Ursprungs, wie z.B. Kolofoniumharze, Tallharzester, Inden/Coumaronharze, Kohlenwasserstoffharze; Haftvermittler, wie z.B. Lignin- und Fettaminderivate; Entschäumer und Entlüfter, wie z. B. auf Siliziumund Esterbasis; Trenn- und Gleitmittel, sowohl intern als auch extern, wie z.B. Talkum, Graphit, Metallseifen; Alterungs- und UV-Schutzadditive; Lösemittel, wie z.B. Testbenzin, RME, Citrusterpen; Sikkative.

Die Auswahl der Art und Menge derartiger Zusatzstoffe richtet sich nach dem jeweiligen Anwendungszweck der Polymerbitumenmasse.

Die erfindungsgemäßen Polymerbitumenmassen sind mindestens ebenso leistungsfähig wie die unter Verwendung von hocharomatischen Mineralölen erhaltenen Polymerbitumina, bzw. sind für einige Anwendungen sogar deutlich leistungsfähiger als diese.

Durch die erfindungsgemäßen Polymerbitumenmassen werden Hochleistungspolymerbitumenmassen für Spezialanwendungen mit hohem Erweichungspunkt bereitgestellt, wobei vorteilhafter Weise
- auch hohe und sehr hohe Polymerkonzentrationen bei vergleichsweise niedrigen Anteilen an Weichmacher bzw. Verträglichkeitsvermittler in Bitumen eingearbeitet werden können,
- auch hohe und sehr hohe Anteile (feinteiliger) Füll- und Armierungsstoffe zusätzlich eingearbeitet werden können.

Die Vorteile gegenüber vergleichbaren Polymerbitumenmassen mit naphtenischen bzw. paraffinischen Mineralölen als Weichmacher bestehen insbesondere darin, dass
- nur 30 bis 40% der Einsatzmenge an Weichmacher benötigt werden, um vergleichbare Effekte zu erzielen,
- Polymere, die bisher wegen Verträglichkeitsproblemen nicht in genügender Menge einmischbar waren, in Bitumen eingearbeitet werden können und damit Produkte mit höherer Leistungsfähigkeit hergestellt werden können,
- neben der wesentlichen Verringerung des Anteils an Weichmacher bzw. Verträglichkeitsvermittler auch der Polymeranteil verringert werden kann, ohne dass wesentliche Eigenschaften, die vom Polymeranteil abhängen, negativ beeinflusst werden (womit ein zum Teil erheblicher Kostenvorteil verbunden ist),
- die Alterungsbeständigkeit gegenüber vergleichbaren Produkten mit Mineralölen als Weichmacher bedeutend erhöht werden kann.

Die erfindungsgemäßen Polymerbitumenmassen werden durch intensives Vermischen der Komponenten Bitumen, Polymer und Weichmacheröl bzw. -fett erhalten. Andere, je nach Anwendungszweck erforderliche Komponenten können anschließend homogen eingemischt werden.

### Beispiele

Nachfolgend wird die Erfindung anhand von Beispielen und Vergleichsbeispielen nach dem Stand der Technik näher erläutert.

Die in den Beispielen und Vergleichsbeispielen beschriebenen Polymerbitumenmassen wurden jeweils durch intensives Vermischen der angegebenen Komponenten erhalten. Zur besseren Vergleichbarkeit der einzelnen Ausführungsbeispiele untereinander wurden alle Versuche unter Verwendung von Rapsöl als natives Weichmacheröl durchgeführt.

Prozentangaben beziehen sich auf das Gewicht (bezogen auf das Gesamtgewicht der jeweiligen Polymerbitumenmasse).

Die Erweichungspunkte (EP) der untersuchten Polymerbitumenmassen wurden jeweils nach der "Ring und Kugel"-Methode gemäß DIN EN 1427 (EP RuK) bestimmt.

### Beispiel 1:

### Polymerbitumendeckmasse mit mittlerem Kunststoffanteil für Dach- und Dichtungsbahnen

| | | **Vergl.-Bsp. 1** | **Bsp. 1** |
|---|---|---|---|
| Bitumen 160/220 | | 54,5% | 56% |
| SBS | | 8% | 7,2% |
| Weichmacheröl | Art | naphtenisches Öl | natives Öl |
| | Menge | 2,5% | 1% |
| Steinmehl | | 35% | 35,8% |
| Erweichungspunkt | | 126 °C | 125 °C |

Die aus den Polymerbitumenmassen dieses Beispiels hergestellten Dachbahnen erfüllen die Anforderungen an Polymerbitumenschweißbahnen nach DIN 52133 (PYE).

In einem Schnellalterungsversuch gemäß DIN EN 1296 wurde die Kälteflexibilität gemäß DIN EN 1109 der Polymerbitumenmasse nach Vergleichsbeispiel 1 sowie der erfindungsgemäßen Polymerbitumenmasse nach Beispiel 1 bestimmt. Die Ergebnisse sind in der folgenden Tabelle zusammengefasst.

| **Zeitpunkt** | **Kälteflexibilität gemäß DIN EN 1109** | |
|---|---|---|
| | **Vergl.-Bsp. 1** | **Bsp. 1** |
| Neu | -25 °C | -25 °C |
| 1 Monat | -21 °C | -23 °C |
| 2 Monate | -18 °C | -22 °C |
| 4 Monate | -16 °C | -20 °C |
| 6 Monate | -12 °C | -19 °C |

Diese Ergebnisse belegen, dass die erfindungsgemäßen Polymerbitumenmassen mit nativem Öl als Weichmacher hinsichtlich der Kälteflexibilität eine bessere Alterungsbeständigkeit aufweisen als Polymerbitumenmassen nach dem Stand der Technik mit mineralischen Weichmacherölen.

### Beispiel 2:

### Polymerbitumendeckmasse mit hohem Kunststoffanteil für Dach- und Dichtungsbahnen

| | **Vergl.-Bsp. 2** | **Bsp. 2** |
|---|---|---|
| Bitumen 160/220 | 46% | 54% |
| (a)PP, mittl. Molekulargewicht | 30% | - |
| (a)PP, hohes Molekulargewicht | - | 22% |
| (i)PP | 2% | 2% |
| Weichmacheröl, isoparaffinisch | 10% | 6% |
| Rapsöl | - | 4% |
| Steinmehl | 12% | 12% |
| Erweichungspunkt | 152°C | 155 °C |

Das Vergleichsbeispiel nach dem Stand der Technik erfüllt zwar sämtliche Anforderungen nach DIN 52133 (PYP). Im Vergleich dazu verfügt das erfindungsgemäße Beispiel jedoch besonders bezüglich der Witterungsfähigkeit deutlich überlegene Eigenschaften.

Erst durch die Verwendung von nativen Ölen bzw. Fetten wird es somit möglich, Polymere wie (a)PP mit hohem Molekulargewicht in ausreichender Menge in Bitumen einzuarbeiten und dadurch ein alterungsbeständigeres Produkt zu schaffen.

### Beispiel 3:

### Selbstklebende Polymerbitumenmasse mit hohem Kunststoffanteil

| | | **Vergl.-Bsp. 3** | **Bsp. 3** |
|---|---|---|---|
| Bitumen 160/220 | | 57,5% | 61% |
| SBS | | 3,5% | 3,5% |
| SIS | | 11% | 8,5% |
| Kolofoniumharz | | 9% | 9% |
| Weichmacheröl | Art | naphtenisches Öl | natives Öl |
| | Menge | 11% | 8% |
| Steinmehl | | 8% | 10% |
| Erweichungspunkt | | 115 °C | 113 °C |

Die Polymerbitumenmassen dieses Beispiels erfüllen die gestellten Anforderungen an selbstklebende Bitumenmassen und besitzen vergleichbare Eigenschaften.

### Beispiel 4:

### Elastoplastische Fugenvergussmasse mit niedrigem Kunststoffanteil

| | | **Vergl.-Bsp. 4** | **Bsp. 4** |
|---|---|---|---|
| Bitumen 70/100 | | 60% | 67% |
| SBS | | 3,5% | 3,5% |
| Altreifenmehl | | 12% | 12% |
| Kohlenwasserstoffharz | | 2,5% | 2,5% |
| Weichmacheröl | Art | naphtenisches Öl | natives Öl |
| | Menge | 12% | 5% |
| Steinmehl | | 10% | 10% |
| Erweichungspunkt | | 100 °C | 98 °C |

Die Polymerbitumenmassen dieses Beispiels erfüllen die gestellten Anforderungen gemäß den Technischen Lieferbedingungen für Fugenfüllstoffe in Verkehrsflächen (TL Fug Stb), Fugenvergussmasse normal.

### Beispiel 5:

### Hochstandfeste elastoplastische Dämpfungsmasse mit mittlerem Kunststoffanteil

| | **Vergl.-Bsp. 5** | **Bsp. 5** |
|---|---|---|
| Bitumen 0/5 | 30% | 29% |
| EVA, 20% VA* | - | 4% |
| EVA, 28% VA* | 4% | - |
| Mineralfaser | 1% | 1% |
| Rapsöl | - | 1% |
| Steinmehl | 65% | 65% |
| Erweichungspunkt | 110 °C | 118 °C |
| Elastische Rückstellung** | 48% | 70% |
| Stempeleindruck*** | 1,8 mm | 1,2 mm |

| | | |
|---|---|---|
| * EVA = (poly)-Ethylen-Vinyl-Acetat; "% VA" bezeichnet den Vinylacetatanteil | | |
| ** bestimmt nach VDV-Druckschrift Nr. 6201 | | |
| *** bestimmt nach DIN 1996, Teil 13 | | |

Die Polymerbitumenmassen dieses Beispiels erfüllen die Anforderungen nach Druckschrift Nr. 6201 ("Untergießen von Schienen") des Verbands deutscher Verkehrsunternehmen (VDV). Die erfindungsgemäße Dämpfungsmasse nach Beispiel 5 verfügt darüber hinaus im Vergleich zu der Dämpfungsmasse nach Vergleichsbeispiel 5 über eine höhere Elastizität bei einer gleichzeitig verbesserten Druckfestigkeit.

Erst durch die Verwendung eines nativen Öls bzw. Fetts als Weichmacher wird es somit möglich, EVA mit 20% VA in ausreichender Menge in Bitumen einzuarbeiten, um dadurch ein härteres und gleichzeitig elastischeres Produkt zu schaffen.

### Beispiel 6:

### Fugenbandmasse mit niedrigem Kunststoffanteil

| | | **Vergl.-Bsp. 6** | **Bsp. 6** |
|---|---|---|---|
| Bitumen 70/100 | | 49% | 54% |
| SBS | | 2% | 2% |
| Weichmacheröl Wetchmacheröl | Art | naphtenisches Öl | natives Öl |
| | Menge | 8% | 3% |
| Cellulosefaser | | 1% | 1% |
| Steinmehl | | 40% | 40% |
| Erweichungspunkt | | 113 °C | 115 °C |

Die Polymerbitumenmassen dieses Beispiels erfüllen die Anforderungen nach TL Fug Stb, Fugenband.

### Beispiel 7:

### Nahtkleber mit niedrigem Kunststoffanteil

| | | **Vergl.-Bsp. 7** | **Bsp. 7** |
|---|---|---|---|
| Bitumen 70/100 | | 49% | 54% |
| SBS | | 2% | 2% |
| Weichmacheröl | Art | naphtenisches Öl | natives Öl |
| | Menge | 8% | 3% |
| Faser | | 4% | 3% |
| Testbenzin 145/200 | | 37% | 38% |
| Erweichungspunkt | | 104 °C (nach Verdunsten des Lösemittels) | 103 °C (nach Verdunsten des Lösemittels) |

Die Polymerbitumenmassen dieses Beispiels besitzen vergleichbare praxisgerechte Eigenschaften.

### Beispiel 8:

### Polymerbitumendeckmassen für Dachbahnen nach DIN 52132/52133

Aus erfindungsgemäßen Polymerbitumenmassen wurden durch Zugabe von Kalksteinmehl als Füllstoff Deckmassen zur Polymerbitumendachbahnproduktion hergestellt. Mit diesen Deckmassen wurden Polymerbitumenschweißbahnen PYE G200 S4 talkumiert nach DIN 52133/52133 hergestellt.

Die Zusammensetzung der verwendeten Polymerbitumenmassen und deren physikalischen Kenndaten, die Zusammensetzung und die physikalischen Kenndaten der Deckmassen sowie die physikalischen Kenndaten der hergestellten Polymerbitumenschweißbahnen sind in Tabelle A angegeben. Darin sind ebenfalls enthalten die entsprechenden Daten für Vergleichsversuche, bei denen Mineralöl anstelle eines nativen Öls (Rapsöl) als Weichmacher verwendet wurde.

Die Daten in Tabelle A belegen, dass sich unter Verwendung eines nativen Weichmacheröls verträgliche homogene Mischungen enthaltend Oxidationsbitumen und SBS herstellen lassen, während die zum Vergleich unter Verwendung von Mineralöl hergestellten Mischungen insbesondere nach der Füllstoffzugabe matt und teilweise grießig waren. Matte Oberflächen und Grießbildung sind Zeichen für Unverträglichkeit der Mischungskomponenten.

Außerdem belegen die in Tabelle A angegebenen Daten eine erhebliche Verbesserung der Kälteflexibilität für die erfindungsgemäß hergestellten Schweißbahnen im Vergleich zu unter Verwendung von Mineralöl als Weichmacher hergestellten Schweißbahnen.

### Beispiel 9:

### Selbstklebende Polymerbitumenmassen

Unter Verwendung von erfindungsgemäßen Polymerbitumenmassen wurden Polymerbitumendichtungsbahnen PYE PV 200 DD nach DIN 52132 mit einer selbstklebenden Unterseite hergestellt. Die Zusammensetzung der verwendeten Polymerbitumenmassen sowie deren physikalischen Kenndaten und die physikalischen Kenndaten der Selbstklebeschicht der hergestellten Dichtungsbahnen sind in Tabelle B angegeben.

Darin sind ebenfalls enthalten die entsprechenden Daten für Vergleichsversuche, bei denen Mineralöl anstelle eines nativen Öls (Rapsöl) als Weichmacher verwendet wurde.

Die Daten in Tabelle B belegen eine erhebliche Verbesserung der Haftfestigkeit (T-Peel Test) und der Untergrundbenetzung (Tack), insbesondere bei niedrigen Temperaturen, bei vergleichbarer Wärmebeständigkeit und Härte für die erfindungsgemäß hergestellten Dichtungsbahnen im Vergleich zu unter Verwendung von Mineralöl als Weichmacher hergestellten Dichtungsbahnen.

### Beispiel 10:

### Fugenvergussmassen

Unter Verwendung von erfindungsgemäßen Polymerbitumenmassen wurden Fugenvergussmassen hergestellt. Deren Zusammensetzung und physikalische Kenndaten sind in Tabelle C angegeben. Darin sind ebenfalls enthalten die entsprechenden Daten für Vergleichsversuche, bei denen Mineralöl anstelle eines nativen Öls (Rapsöl) als Weichmacher verwendet wurde.

Die in Tabelle C angegebenen Daten belegen, dass sich unter Verwendung eines nativen Öls als Weichmacher verträgliche homogene Mischungen aus Oxidationsbitumen und SBS herstellen lassen. Darüber hinaus belegen diese Daten erhebliche Verbesserungen der Dehnfähigkeit in der Kälte und der Maximalspannung bei gleichbleibender oder sogar härterer Einstellung (Konuspenetration) für erfindungsgemäß hergestellte Fugenvergussmassen im Vergleich zu unter Verwendung von Mineralöl als Weichmacher hergestellten Fugenvergussmassen.

### Beispiel 11:

### Fugenbandmassen

Unter Verwendung von erfindungsgemäßen Polymerbitumenmassen wurden Fugenbandmassen hergestellt. Die Zusammensetzung und physikalischen Kenndaten der hergestellten Fugenbandmassen sind in Tabelle D angegeben. Darin sind ebenfalls enthalten die entsprechenden Daten für Vergleichsversuche, bei denen Mineralöl anstelle eines nativen Öls (Rapsöl) als Weichmacher verwendet wurde.

Die in Tabelle D angegebenen Daten belegen erhebliche Verbesserungen der Kälteflexibilität und Dehnung bei vergleichbarer Wärmebeständigkeit und Härte für erfindungsgemäße Fugenbandmassen im Vergleich zu unter Verwendung von Mineralöl als Weichmacher hergestellten Fugenbandmassen.

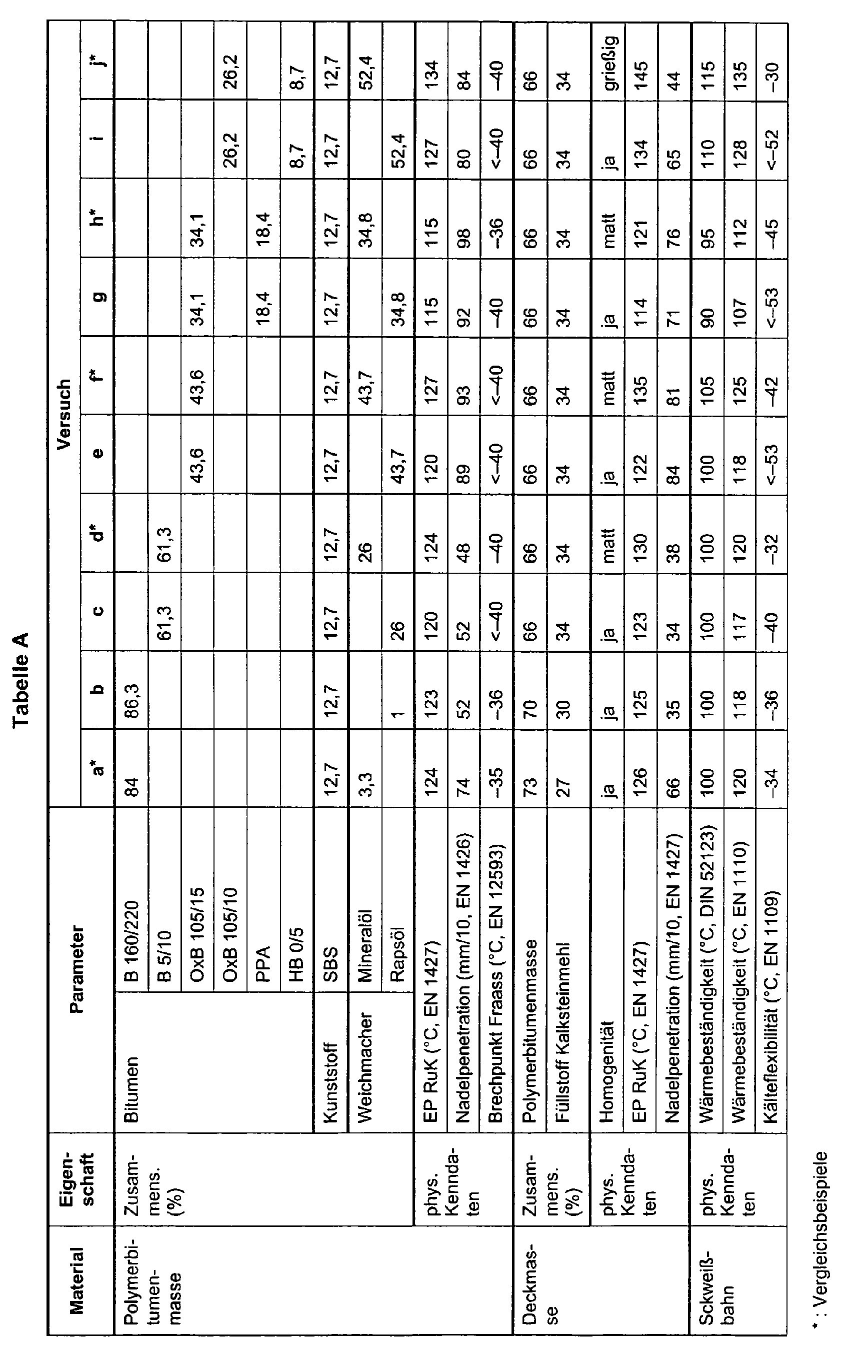

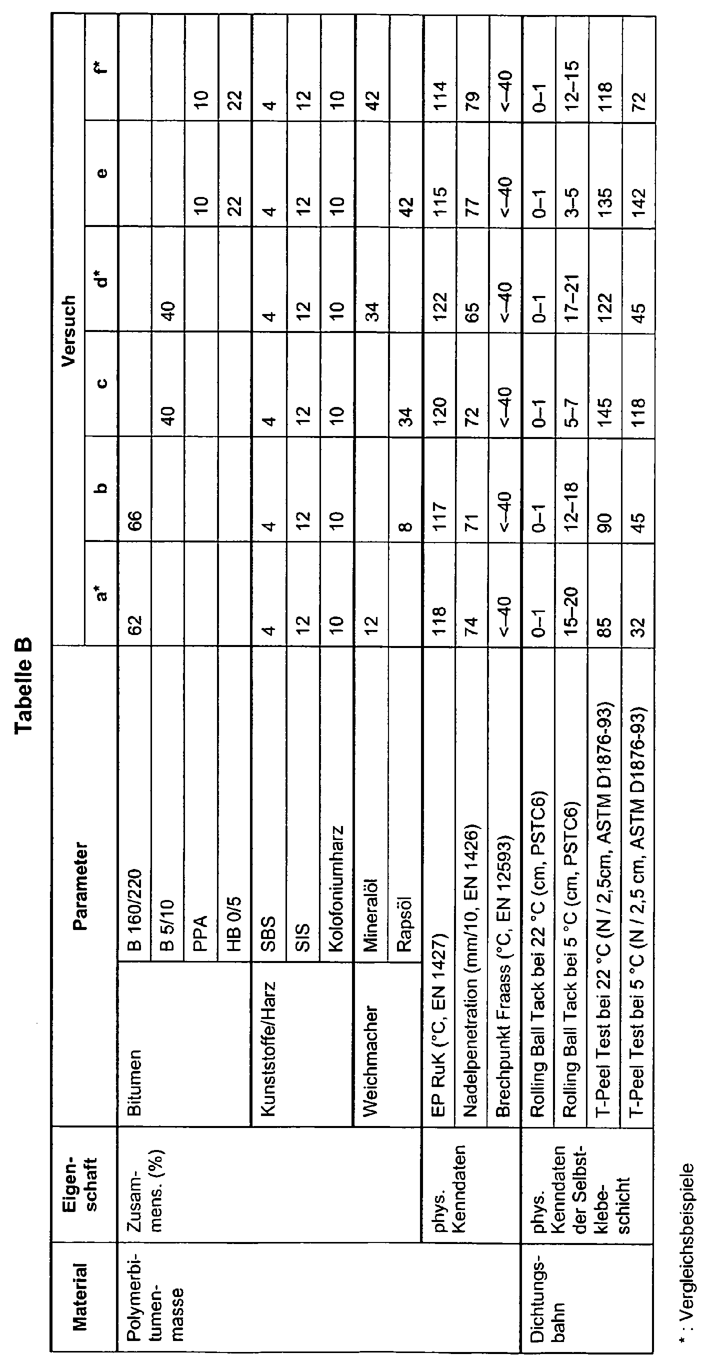

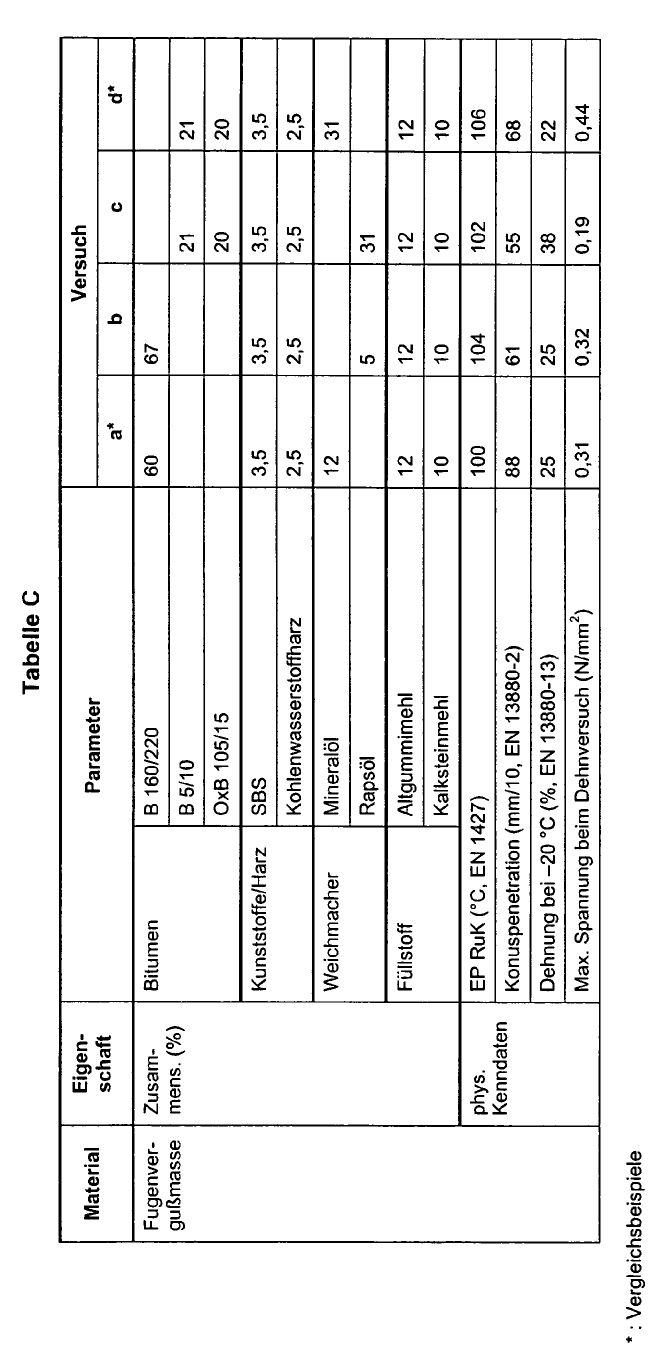

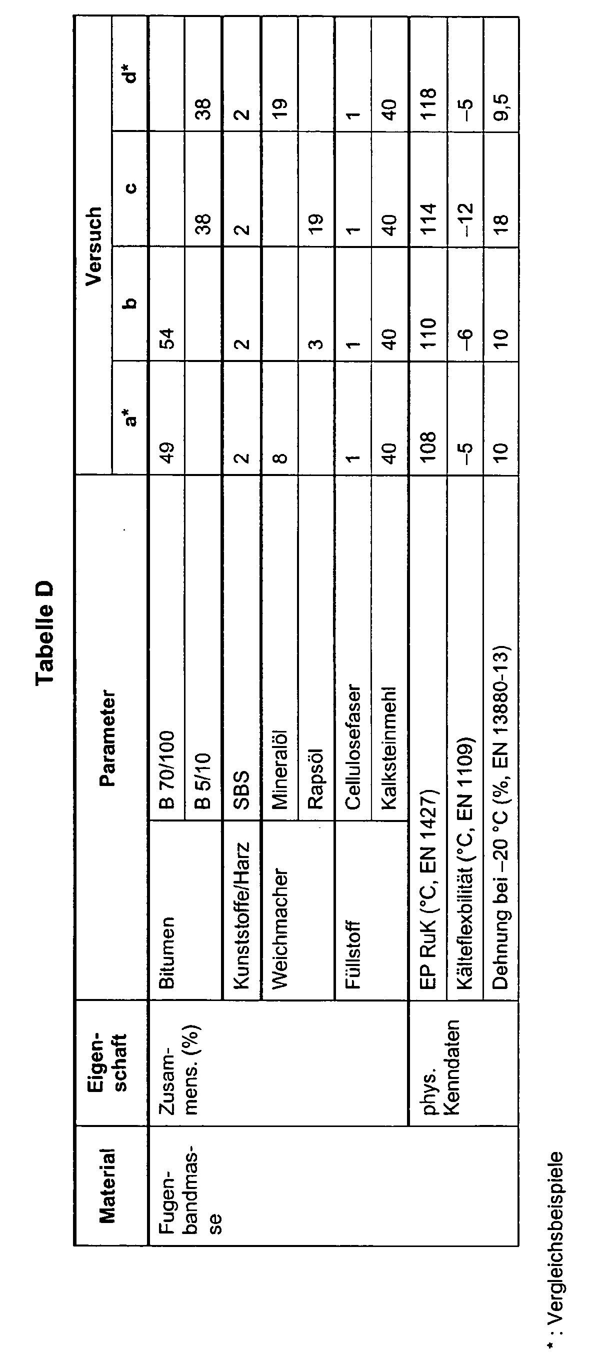

## Patentansprüche

1. Polymerbitumenmasse, umfassend
(a) Bitumen,
(b) mindestens ein Polymer und
(c) mindestens ein tierisches und/oder pflanzliches Öl oder Fett oder ein Derivat oder ein Gemisch davon,
wobei der Erweichungspunkt der Polymerbitumenmasse mindestens 85 °C beträgt.

2. Polymerbitumenmasse nach Anspruch 1, wobei der Erweichungspunkt mindestens 90 °C beträgt.

3. Polymerbitumenmasse nach Anspruch 1, wobei der Erweichungspunkt mindestens 95 °C beträgt.

4. Polymerbitumenmasse nach einem der voranstehenden Ansprüche, wobei das tierische und/oder pflanzliche Öl oder Fett ausgewählt ist aus der Gruppe, bestehend aus Holzöl, Kokosöl, Leinöl, Olivenöl, Palmöl, Rapsöl, Rizinusöl, Distelöl, Nussöle, Keimöle, Sonnenblumenöl, Sojaöl, Tallöl, Heringsöl, Menhadenöl, Klauenöl, Knochenöl, Lardöl und Lebertran, bzw. Stillingiafett, Sheabutter, Palmbutter, Rindertalg, Schweineschmalz, und Butterfett.

5. Polymerbitumenmasse nach einem der voranstehenden Ansprüche, wobei das Polymer ausgewählt ist aus der Gruppe, bestehend aus SBS, SEBS, SEPS, SIS, PE, (a)PP, (i)PP, EVA, EMA, EBA, EEA, E(P)(D)M, CR, NR, SBR und ACR sowie Gemischen daraus.

6. Polymerbitumenmasse nach einem der voranstehenden Ansprüche, wobei das Bitumen ausgewählt ist aus der Gruppe, bestehend aus Destillationsbitumen, Oxidationsbitumen, Fällungsbitumen und Naturasphalt sowie Gemischen daraus.

7. Polymerbitumenmasse nach einem der voranstehenden Ansprüche, wobei der Anteil des Bitumens im Bereich von 25 bis 70 Gew.-% bezogen auf das Gesamtgewicht der Polymerbitumenmasse liegt.

8. Polymerbitumenmasse nach einem der voranstehenden Ansprüche, wobei der Anteil des Polymers im Bereich von 2 bis 50 Gew.-% bezogen auf das Gesamtgewicht der Polymerbitumenmasse liegt.

9. Polymerbitumenmasse nach einem der voranstehenden Ansprüche, wobei der Anteil des Polymers im Bereich von 8 bis 50 Gew.-% bezogen auf das Gesamtgewicht der Polymerbitumenmasse liegt.

10. Polymerbitumenmasse nach einem der voranstehenden Ansprüche, wobei der Anteil des tierischen und/oder pflanzlichen Öls oder Fetts oder des Derivats davon im Bereich von 1 bis 70 Gew.-% bezogen auf das Gesamtgewicht der Polymerbitumenmasse liegt.

11. Polymerbitumenmasse nach einem der voranstehenden Ansprüche, wobei der Anteil des tierischen und/oder pflanzlichen Öls oder Fetts oder des Derivats davon im Bereich von 1 bis 50 Gew.-% bezogen auf das Gesamtgewicht der Polymerbitumenmasse liegt.

12. Polymerbitumenmasse nach einem der voranstehenden Ansprüche, wobei der Anteil des tierischen und/oder pflanzlichen Öls oder Fetts oder des Derivats davon im Bereich von 1 bis 10 Gew.-% bezogen auf das Gesamtgewicht der Polymerbitumenmasse liegt.

13. Polymerbitumenmasse nach einem der voranstehenden Ansprüche, wobei sie zusätzlich eine oder mehrere Komponenten ausgewählt aus der Gruppe, bestehend aus Füllstoffen natürlichen, (teil-)synthetischen oder mineralischen Ursprungs; Fasern natürlichen, (teil-)synthetischen oder mineralischen Ursprungs; Wachsen natürlichen, (teil-)synthetischen oder mineralischen Ursprungs; Harzen natürlichen oder (teil-)synthetischen Ursprungs; Haftvermittlern; Entschäumern und Entlüftern; Trenn- und Gleitmitteln; Alterungs- und UV-Schutzadditiven; Lösemitteln; und Sikkativen umfaßt.

14. Polymerbitumenmasse nach einem der voranstehenden Ansprüche, wobei diese zur Herstellung von Dach- und Dichtungsbahnen, Fugenvergussmassen, Fugenbandmassen, selbstklebenden Polymerbitumenmassen, Dämpfungsmassen oder Nahtklebern geeignet ist.
